# EUROPEAN PATENT SPECIFICATION

(11) **EP 1 999 213 B1**
(45) Date of publication and mention of the grant of the patent: **13.11.2019**
(21) Application number: 07762393.2
(22) Date of filing: 24.01.2007
(51) Int. Cl.: C09B 62/00, D06P 1/00, D06P 1/52, D06P 3/66

(54) **METHOD FOR DYEING CELLULOSIC FABRIC.**
VERFAHREN ZUR FÄRBUNG VON STOFFE AUS ZELLULOSE.
PROCÉDÉ DE TEINTURE DE TISSUS CELLULOSIQUES.

(30) Priority: 24.01.2006 US 338346
(43) Date of publication of application: 10.12.2008
(73) Proprietor: HBI Branded Apparel Enterprises, LLC, Winston-Salem, NC 27105 (US)
(72) Inventor: MAY, Ruth, E., Schuylkill Haven, PA 17972 (US); BENTHAM, Martin, Ardsley, Barnsley South Yorkshire S71 5DX (GB)
(74) Representative: Conroy, John
(86) International application number: PCT/US2007/002058
(87) International publication number: WO 2007/087407

(56) References cited:
- US-A- 4 792 619
- US-A1- 2003 154 556
- US-A1- 2005 241 080

## Description

### BACKGROUND OF THE INVENTION

### 1. Field of the Invention

The present invention relates to dyeing of cellulosic fabric. More particularly, the present invention relates to compositions for uniformly providing, preferably by spraying, a dye on both surfaces or sides of a cellulosic fabric. In a less preferred embodiment, the present invention relates to compositions having a mixture of reactive dyes, which compositions provide a uniform color on both sides of a cellulosic greige or scoured or bleached fabric, by a spray application of the composition to the fabric.

### 2. Description of Related Art

Today, fabrics are made from a wide-variety of natural fibers, such as cotton, synthetic fibers, or any combination thereof. The basic fabric is a greige fabric that is needed to be dyed in order to provide the desired color to the resultant fabric and/or garment. Many compositions and methods have been proposed for dyeing fabrics, however all have proven costly in material cost, as well as time.

One method, commonly referred to as yarn dyeing, involves dyeing individual fibers or yarns prior to these fibers being sewn or knitted into a fabric. One problem associated with this method is inventory control of the yarns and associated garments. For example, yarn dyeing requires the garment manufacturer to maintain a supply of the various colored yarns-used in its products, which inventory increases cost.

Another dyeing method is commonly referred to as bulk dyeing. In bulk dyeing, un-dyed fibers or yarns are knitted or woven into a raw or un-dyed fabric. The raw fabric is subsequently scoured or bleached and then dyed. The dyed fabric is then used to make the desired product, such as a garment.

Some common bulk dyeing methods include vat dyeing, beam dyeing, jet dyeing, and bath dyeing. Vat dyeing typically consists of immersing a piece of fabric in a vat of liquid dye. Beam dyeing involves winding a length of fabric about a perforated beam.

The beam is then placed in a vessel where liquid dye is pumped into the center of the beam, out of the perforations, and through the fabric. Jet dyeing involves placing the fabric in a high-pressure, high-temperature kettle of liquid dye. Bath dyeing involves immersing the fabric in a bath of dye, which is contained in a rotating drum.

One problem associated with such bulk dyeing methods relates to the fabric that is cut away or removed during manufacture of the fabric into the desired garment. The fabric that is cut away has been dyed and, thus, includes the cost of the dye. This can lead to an increased cost of goods for garments made from bulk dyed fabrics. Another problem with bulk dyeing methods relates to the large amounts of water required during processing, which can increase cost of goods for such bulk dyed fabrics, as well as having an adverse effect on the environment and an erosion of resources.

A more significant problem with bulk dyed fabrics in the manufacture of garments is the unpredictability of consumer color preferences. In the garment industry, change in the consumer's preference for one color over another color can lead to an overstock of the undesired colored garments and a back order situation of the desired colored garments. Thus, garments made from bulk dyed fabrics have not proven flexible enough to meet increasing and changing consumer demands.

Further methods of dyeing fabrics involve printing a dye onto a surface of a fabric. This method is commonly used to apply a decorative pattern on the surface of the fabric. Such printing methods include screen-printing and inkjet printing.

US 2005/0241080 discloses modifying a conventional dystuff, by creating a visions dye solution, to allow printing on most fabric.

Similarly US 4,792,619 is concerned with a process for creating a print faste or foam which is forced through a screen to print one side of a fabric. While these methods have proven useful in quickly changing from one decorative pattern to another, they have not proven useful in bulk dyeing of fabrics or. completed garments.

Perhaps, one of the cost effective methods of dyeing a fabric is spray dyeing. Spray dyeing, as used herein, includes conventional spraying as well as atomization and electrostatic applications. However, a problem with spray dyeing is to provide a uniform dye on both sides of the garment. Normally, to attempt to achieve such uniformity requires spray dyeing on both sides of the fabric or garment in a very controlled environment. Also, the fabric or garment must remain in a taunt position in order to provide penetration into the fabric or garment yet not have any garment area that is covered or unavailable for receipt of the spray. This is difficult to achieve, let alone in a cost effective manner, especially if both sides of the garment are to be spray dyed.

Accordingly, there is a need for a composition and resultant method of dyeing cellulosic, especially greige or scoured or bleached, fabrics that provide uniform color on both sides of the fabric. It is particularly important to provide such a composition that can dye cotton to any desired color in one basic spray step or operation without the need of a controlled environment and without the problems noted above for positioning the fabric or garment, yet with good dye penetration into the fabric or garment.

### SUMMARY OF THE INVENTION

The present invention provides a method that permits spray dyeing of a cellulosic fabric or garment.

The present invention also provides a method that permits spray dyeing of a cellulosic, such as cotton, fabric or garment, so that both sides of the garment have the same uniform color or dye.

The present invention further provides a method that permits uniform spray dyeing of a cellulosic fabric or garment on both-surfaces of the fabric or garment.

The present invention still further provides a method that permits uniform spray dyeing of both sides or surfaces of a cellulosic fabric or garment thereby providing a more uniform dyeing throughout the fabric or garment so that the print is the same inside and on the surfaces of the fabric or garment.

The present invention yet further provides a method that, in a less preferred embodiment, permits spray dyeing of one side of a cellulosic fabric or garment, yet provides the uniform color or dye to both surfaces of the garment.

The present invention also provides a method of making a composition that can, through spraying, uniformly dye both surfaces of a cellulosic fabric or garment.

These and other advantages and benefits of the present invention are provided by a composition that is anionic. The composition includes a wetter, an alkali, a reactive dye, water, and a thickener. In other embodiments of the present invention, the composition can include one or more of the following: a chelator, a dye leveling agent, an anti -reducing agent, a defoamer, and sodium chloride. In an earlier, less preferred embodiment, the composition includes a wetter, an alkali, a reactive dye, and water.

According to the invention there is provided a method as defined in claim 1.

The above-described and other advantages and features of the present disclosure will be appreciated and understood by those skilled in the art from the following detailed description and appended claims.

### DETAILED DESCRIPTION OF THE INVENTION

The present disclosure provides a composition that can be applied to a fabric or garment (hereinafter referred to as "fabric") made of a cellulosic material. The composition provides uniform color throughout the fabric, namely on both sides or surfaces of the fabric, as well as throughout the fabric. The fabric can be a part of or the complete finished garment, such as, but not limited to, a shirt, pant, underwear, panty, sock, skirt, dress, short, coat, suit, scarf, glove, hat, and any other apparel item. Also, the fabric can be a sheet, towel, pillowcase, or any other cellulosic made material. Thus, the present compositions can efficiently and effectively color a cellulosic fabric, that cellulosic fabric can be combined with a non-cellulosic fabric to form a finished garment or the cellulosic fabric can make-up the entire finished garment.

The term cellulosic has its conventional meaning, and therefore includes cotton and fabric made of about 100 percent cotton. The cellulosic material can be greige, scoured or bleached or any combination of same.

The present compositions include a wetter or wetting agent, a reactive dye, an alkali, a thickener and water. In addition, the composition may include one or more of the following: a chelator, a dye leveling agent, a defoamer, an anti-reducing agent, and sodium chloride. In a less preferred embodiment, the composition can include a wetter, a reactive dye, a thickener and water. In the present compositions, each ingredient is anionic or non ionic.

The wetter of the present compositions acts to transports the dye into the fabric thereby assisting in locking the color into the substrate. The wetter is a blend of one or more surfactants. The surfactants provide detergent properties to the fabric. The surfactants in the blend are anionic or nonionic. At this time, it is believed that any anionic or nonionic surfactant can be used. The preferred wetter or blend of surfactants has sulfuric acid disodium salt and phosphoric acid, trisodium salt. In a less preferred embodiment, the wetter can be sodium dioctyl sulfoosuccinate.

The wetter is preferable present in an amount about 5 grams per liter (g/l) to about 40 g/L based on the total g/L of the composition. More preferably, the wetter is present in an amount about 5 g/L to about 20 g/L and most preferably about 5 g/L based on the total g/L of the composition.

A reactive dye is used in the present compositions. The reactive dye is a cold or mid-temperature range reactive dye. The reactive dye is a dye that reacts with fibers in the fabric or garment to form a covalent bond. While many reactive dyes can be used, a reactive dye particularly suited for dyeing cellulosic fabric or fibers, such as cotton, is an azo dye, an azo metal complex and dioxazine. Preferably, the dye is an azo metal complex or dioxazine.

The reactive dye is present in an amount about 10 g/L to about 80 g/L based on the total g/L of the composition. The precise dye amount is based on the color value and depth of color desired. For example, a pink color for the fabric would need about 10 g/L to about 20 g/L dye based on the total g/L of the composition. If the color desired is royal blue, the dye would be about 40 g/L to about 60 g/L based on the total g/L of the composition.

All embodiments of the present compositions have an alkali. The alkali of the present compositions should have a pH between about 10.5 and about 11.7.

The alkali preferably is a liquid alkali. The liquid alkali preferably is a combination of soda ash, potassium carbonate and phosphate.

In another embodiment, the alkali could be a combination of a silicate, preferably a sodium silicate, and a caustic. The caustic is preferably sodium hydroxide or sodium carbonate. The caustic may be soda ash. The sodium silicate assists in bleaching the cellulosic fabric, and acts to stabilize the composition. The alkali is preferably a combination of a sodium silicate and a caustic if the fabric is a greige fabric or only a caustic, preferably, soda ash, if the fabric is a finished fabric.

In yet another embodiment for bright and light colors, the alkali is a combination of a sodium silicate and a caustic, namely soda ash. The sodium silicate and caustic are present in about a 2 to about 1 ratio. Thus, 2 parts sodium silicate warrants 1 part caustic.

The alkali, when a combination of the sodium silicate and caustic or simply solely a caustic, is present in an amount about 3 g/L to about 20 g/L based on the total g/L of the composition. More preferably, the alkali is present in an amount about 5 g/L to about 15 g/L based on the total g/L of the composition. For a dark color, the alkali is present in an amount about 10 g/L based on the total g/L of the composition.

The present compositions have a thickener. The thickener is important to assist in providing the levelness of color in the fabric or garment particularly during spray operations. It is believed that the thickener keeps the molecules of the dye in suspension on the fabric being sprayed. The use of a thickener in spraying will control viscosity to ensure an even spray.

The thickener of the present compositions is an acrylic acid copolymer, an aliphatic polyester polyurethane, or a polyacrylate. The thickener can be an acrylic acid copolymer. The preferred acrylic acid copolymer has about 2% to about 3% naphthol spirits. A preferred thickener is an acrylic acid copolymer sold under the mark Acraconz FN by Lanxess Corporation of Pittsburgh, PA. This copolymer has 7 to 13 percent ethoxylated alcohol, about 1 % hexadecane, and about 1 % acrylamide PI'N acrylic acid ammonium salt.

The thickener is present in an amount about 5 g/L to about 50 g/L based on the total g/L of the composition. Most preferably, the thickener is present in an amount about 5 g/L to about 20 g/L based on the total g/L of the composition.

The present compositions each have water in a q.s. amount.

Optionally, the present compositions can have one or more of the following ingredients. The first such optional ingredient is a chelator. The chelator is, like all other ingredients of the present compositions, an anionic or a non ionic ingredient. The chelator must be a stable to high alkali for the purposes of the present compositions. The chelator is used to remove hard metals from the water, and prevents precipitation that leads to unevenness of the color. It can also assist in stabilizing the dye bath. Thus, a chelator may not be needed in the present compositions if no minerals, such as hard metals, are present in the fabric or garment or in the water source. Chelators that can be used in the present compositions include, but are not limited to, a blend of amino acid derivatives or pentasodium salt of diethlenetriaminepenta acetic acid.

When present, the chelator is preferably present in an amount about 1 g/L to about g/L g/L based on the total g/L of the composition. More preferably, the chelator is present in an amount about 1 g/L to about 20 g/L and most preferably about 6 g/L, based on the total g/L of the composition.

The optional dye leveling agent is used to provide uniformity for the dye in the composition. Thus, if the desired uniformity is achieved by the composition itself alone or in combination with the spray method used, the dye leveling agent is not needed. In the present compositions, a dye leveling agent does not appear to be needed due to the thickener. However, the present disclosure envisions the possibility that there are situations in which the dye leveling agent could be used.

The present compositions can optionally have a defoamer. The defoamer acts to eliminate non-aerated liquid that is desired when a spray is used to apply the present compositions. Defoamers that can be used in the present compositions include, but are not limited to, petroleum distillate blend, organosilicone, petroleum distillate, hydrocarbon or reacted silicone. A preferred defoamer is a petroleum distillate blend. The defoamer is preferably present in an amount about 0.1 % g/L to about 0.5% g/L based on the total g/L of the composition.

The present compositions can optionally have an anti-reducing agent.

The present compositions can be formulated and applied according to the following method in order to enhance the efficacy of the composition. First, the wetter, chelator if included, dye and water are mixed together to form a first solution that has the dye well dissolved or blended therein. Second, the thickener should be added and mixed, preferably in a high speed mixer, into the first solution to form a second solution. The high speed mixer is needed to shear the thickener into the blend. This high speed mixing should be for about five (5) minutes to about one (1) hour. Thereafter, the alkali is mixed into the second solution. Alternatively, the alkali can be independent and merged or mixed at the spray head with the second solution.

Within thirty (30) minutes after the alkali is mixed into or merged with the second solution, the composition must be applied to the cellulosic fabric. It is important that the alkali is merged, mixed or blended with the second solution within the thirty minutes of application to the fabric or garment since beyond thirty minutes the dye molecules may hydrolyze.

The composition is sprayed on the surfaces or sides of a fabric using any spray nozzle. Preferably, the spray nozzle is movable with respect to each surface or side of the fabric so that a substantially even coat of the composition is applied to the surfaces of fabric. One preferred method of spray dyeing is disclosed in US-B-7033403.

Advantageously, the composition can be applied by spraying onto the two surfaces or sides of the fabric in about one (1) to about twenty (20) seconds, and preferably in about five (5) to about twenty (20) seconds. Of course, this time depends on the size of the fabric, with a larger-in-size fabric expected to take more and smallerin-size fabric expected to take less time of the aforementioned time ranges.

It should be recognized that the present invention contemplates any number of spray nozzles and any positioning of same. Also, the size of the head of a spray nozzle may vary.

Advantageously, the present compositions apply and affix to the fabric in a time effective, efficient manner. Accordingly, the cost of garment will be reduced as compared to all known present dye methods.

Thus, the present compositions, that avoid the use of a controlled environment and provide an ability to dye all cellulosic fabrics including greige, scoured and bleached, facilitates manufacturing flexibility in that rapid changeover from one color to another color can easily be achieved. This is a significant benefit to manufacturer since it minimizes or virtually eliminates inventory control costs and problems associated with the pre-dyed yarns and pre-dy.ed garments of prior processes.

Other benefits of the method of the present disclosure include that the amount of water consumption is reduced from known methods of spray dyeing. Also, the amount of dye used is less than known methods since the dye applied to the surfaces penetrates more easily and readily than any known composition. Thus, less dye is needed to achieve complete dyeing. Another benefit achieved by the use of the present compositions to spray dye cellulosic fabrics is that one can effectively and efficiently manufacture small runs certain color dye fabrics.

It is contemplated, but in a less preferred embodiment, that the present composition can be sprayed onto only one side or surface of the cellulosic material and by the use of spraying and a mixture of reactive dyes in the composition, the composition may penetrate through the entire cellulosic material and onto the other side or surface. It is believed that mixture of reactive dyes, namely two or more reactive dyes as defined above, and good spray conditions, will provide a good uniform dye through and on both sides of the cellulosic material even though sprayed onto only one surface of the cellulosic material.

A benefit of the application of the present compositions to fabric is that the fabric has great shrinkage almost analogous to that inherent in the fabric. Obtaining such shrinkage by the application of the present compositions reduces subsequent shrinkage. Reducing subsequent shrinkage will improve the characteristics of the fabric.

## Claims

1. A method comprising:
making a composition for dyeing a cellulosic material, the making of the composition comprising
mixing together a wetting agent, a reactive dye and water to form a solution,
mixing a thickener into the solution for five minutes to one hour to form a partial composition, and
mixing or blending an alkali either to the partial composition or merging it with the partial composition; and
within thirty minutes, spraying the composition onto the cellulosic material.

2. The method of claim 1, where in the composition for dyeing a cellulosic material comprises:
a wetting agent in an amount of 5 g/l to 40 g/l;
an alkali in an amount of 3 g/l to 20 g/l;
a reactive dye in an amount of 10 g/l to 80 g/l;
a thickener in an amount of 5 g/l to 50 g/l based on the total g/l of the composition; and
water in the remaining amount, wherein the wetting agent, the alkali, the reactive dye and the thickener are anionic or non ionic ingredients.

3. The method of claim 2, wherein the composition further comprises a chelator in an amount of 1 g/l to 40 g/l based on the total g/l of the composition.

4. The method of claim 2, wherein the alkali is a combination of soda ash, potassium carbonate and phosphate.

5. The method of claim 2, wherein the thickener is an acrylic acid copolymer.

6. The method of claim 5, wherein the acrylic acid copolymer has 2% to 3% naphthol spirits.

7. The method of any preceding claim, wherein the cellulosic material is cotton.

8. The method of claim 1 or 2, wherein the wetting agent is a blend of one or more surfactants.

9. The method of claim 8, wherein the blend of one or more surfactants includes sulfuric acid disodium salt and phosphoric acid, trisodium salt.

10. The method of claim 1 or 2, wherein the reactive dye is an azo metal complex or dioxazine.

11. The method of claim 1 or 2, further comprising one or more ingredients selected from the group consisting of a defoamer, an anti-reducing agent, and sodium chloride.

12. The method of claim 1 or 2, wherein the cellulosic material forms a garment that is selected from the group consisting essentially of a brassiere, shirt, pants, underwear, panty, sock, skirt, dress, shorts, coat, suit, scarf, glove, and hat.

13. The method of claim 1, further comprising spraying the composition onto a first surface or side of the cellulosic fabric, wherein the composition penetrates through the entire cellulosic material and onto a second surface or side of the cellulosic material.

## Patentansprüche

1. Verfahren, umfassend:
Herstellen einer Zusammensetzung zum Färben eines Zellulosematerials, wobei das Herstellen der Zusammensetzung umfasst:
Vermischen eines Benetzungsmittels, eines Reaktivfarbstoffs und von Wasser miteinander, um eine Lösung auszubilden,
Mischen eines Verdickungsmittels in die Lösung für fünf Minuten bis eine Stunde zum Ausbilden einer Teilzusammensetzung, und
Mischen oder Vermischen eines Alkali entweder in die Teilzusammensetzung oder Zusammenfließenlassen desselben mit der Teilzusammensetzung; und
innerhalb von dreißig Minuten, Sprühen der Zusammensetzung auf das Zellulosematerial.

2. Verfahren nach Anspruch 1, wobei die Zusammensetzung zum Färben eines Zellulosematerials umfasst:
ein Benetzungsmittel in einer Menge von 5 g/l bis 40 g/l;
ein Alkali in einer Menge von 3 g/l bis 20 g/l;
einen Reaktivfarbstoff in einer Menge von 10 g/l bis 80 g/l;
ein Verdickungsmittel in einer Menge von 5 g/l bis 50 g/l basierend auf der Gesamtmenge in g/l der Zusammensetzung; und
Wasser in der restlichen Menge, wobei das Benetzungsmittel, das Alkali, der Reaktionsfarbstoff und das Verdickungsmittel anionische oder nicht ionische Ingredienzien sind.

3. Verfahren nach Anspruch 2, wobei die Zusammensetzung ferner einen Chelator in einer Menge von 1 g/l bis 40 g/l basierend auf der Gesamtmenge in g/l der Zusammensetzung umfasst.

4. Verfahren nach Anspruch 2, wobei das Alkali eine Kombination aus Ammoniaksoda, Kaliumkarbonat und Phosphat ist.

5. Verfahren nach Anspruch 2, wobei das Verdickungsmittel ein Acrylsäurecopolymer ist.

6. Verfahren nach Anspruch 5, wobei das Acrylsäurecopolymer 2 % bis 3 % Naphtholgeist aufweist.

7. Verfahren nach einem der vorhergehenden Ansprüche, wobei das Zellulosematerial Baumwolle ist.

8. Verfahren nach Anspruch 1 oder 2, wobei das Benetzungsmittel eine Mischung von einem oder mehr Tensiden ist.

9. Verfahren nach Anspruch 8, wobei die Mischung von einem oder mehr Tensiden Schwefelsäure-Dinatriumsalz und Phosphorsäure-Trinatriumsalz enthält.

10. Verfahren nach Anspruch 1 oder 2, wobei der Reaktivfarbstoff ein Azometallkomplex oder Dioxazin ist.

11. Verfahren nach Anspruch 1 oder 2, ferner umfassend ein oder mehr Ingredienzien, die aus der Gruppe ausgewählt sind, welche aus einem Entschäumer, einem Reduktionsschutzmittel und Natriumchlorid besteht.

12. Verfahren nach Anspruch 1 oder 2, wobei das Zellulosematerial ein Kleidungsstück ausbildet, das aus der Gruppe ausgewählt ist, welche im Wesentlichen aus einem Büstenhalter, einem Hemd, einer Hose, Unterwäsche, einem Schlüpfer, Socken, einem Rock, einem Kleid, Shorts, einem Mantel, einem Anzug, einem Schal, Handschuhen und einem Hut besteht.

13. Verfahren nach Anspruch 1, ferner umfassend das Sprühen der Zusammensetzung auf eine erste Oberfläche oder Seite des Zellulosestoffs, wobei die Zusammensetzung das gesamte Zellulosematerial durchdringt und auf eine zweite Oberfläche oder Seite des Zellulosematerials dringt.

## Revendications

1. Procédé comprenant :
la fabrication d'une composition pour la teinture d'un matériau cellulosique, la fabrication de la composition comprenant :
le mélange d'un agent mouillant, d'un colorant réactif et d'eau pour former une solution,
l'introduction par mélange d'un épaississant dans la solution pendant cinq minutes à une heure pour former une composition partielle, et
le mélange ou l'incorporation d'un alcali soit dans la composition partielle, ou le fait de le mêler à la composition partielle ; et
dans les trente minutes, la pulvérisation de la composition sur le matériau cellulosique.

2. Procédé selon la revendication 1, dans lequel la composition pour la teinture d'un matériau cellulosique comprend :
un agent mouillant dans une quantité de 5 g/l à 40 g/l ;
un alcali dans une quantité de 3 g/l à 20 g/l ;
un colorant réactif dans une quantité de 10 g/l à 80 g/l ;
un épaississant dans une quantité de 5 g/l à 50 g/l relativement au g/l total de la composition ; et
la quantité restante étant de l'eau, dans lequel l'agent mouillant, l'alcali, le colorant réactif et l'épaississant sont des ingrédients anioniques ou non ioniques.

3. Procédé selon la revendication 2, dans lequel la composition comprend en outre un chélateur dans une quantité de 1 g/l à 40 g/l relativement au g/l total de la composition.

4. Procédé selon la revendication 2, dans lequel l'alcali est une combinaison de carbonate de soude, de carbonate de potassium et de phosphate.

5. Procédé selon la revendication 2, dans lequel l'épaississant est un copolymère d'acide acrylique.

6. Procédé selon la revendication 5, dans lequel le copolymère d'acide acrylique contient 2 % à 3 % de White-spirit.

7. Procédé selon l'une quelconque des revendications précédentes, dans lequel le matériau cellulosique est le coton.

8. Procédé selon la revendication 1 ou 2, dans lequel l'agent mouillant est un mélange d'un ou plusieurs tensioactifs.

9. Procédé selon la revendication 8, dans lequel le mélange d'un ou plusieurs tensioactifs comprend un sel disodique de l'acide sulfurique et un sel trisodique de l'acide phosphorique.

10. Procédé selon la revendication 1 ou 2, dans lequel le colorant réactif est un complexe métallique azoïque ou la dioxazine.

11. Procédé selon la revendication 1 ou 2, comprenant en outre un ou plusieurs ingrédients sélectionnés dans le groupe constitué d'un antimousse, d'un agent anti-réduction, et du chlorure de sodium.

12. Procédé selon la revendication 1 ou 2, dans lequel le matériau cellulosique forme un vêtement qui est sélectionné dans le groupe constitué essentiellement d'un soutien-gorge, d'une chemise, d'un pantalon, d'un sous-vêtement, d'une culotte, d'une chaussette, d'une jupe, d'une robe, de shorts, d'un manteau, d'un costume, d'une écharpe, d'un gant, et d'un chapeau.

13. Procédé selon la revendication 1, comprenant en outre la pulvérisation de la composition sur une première surface ou un premier côté du tissu cellulosique, la composition pénétrant à travers l'ensemble du matériau cellulosique, et sur une deuxième surface ou un deuxième côté du matériau cellulosique.
